# EUROPEAN PATENT SPECIFICATION

(11) **EP 4 368 517 B1**
(45) Date of publication and mention of the grant of the patent: **17.12.2025**
(21) Application number: 23198435.2
(22) Date of filing: 20.09.2023
(51) Int. Cl.: B64F 5/00, B41J 3/407, B41M 5/00, B64F 5/30, B64F 5/50, B05B 13/02, B05B 16/00, B64F 1/222, B64F 5/10

(54) **APPARATUS AND METHOD FOR INLINE CONTINUOUS-FLOW LIVERY APPLICATION**
VORRICHTUNG UND VERFAHREN ZUR INLINE-AUFBRINGUNG VON BEMALUNG IN KONTINUIERLICHEM FLUSS
APPAREIL ET MÉTHODE POUR L'APPLICATION EN LIGNE D'UNE LIVRÉE À FLUX CONTINU

(30) Priority: 08.11.2022 US 202217983162
(43) Date of publication of application: 15.05.2024
(73) Proprietor: The Boeing Company, Arlington, VA 22202 (US)
(72) Inventor: Arthur, Shane, Arlington, 22202 (US); Larson-Smith, Kjersta, Arlington, 22202 (US); Piper, Ryan E., Arlington, 22202 (US)
(74) Representative: Witte, Weller & Partner Patentanwälte mbB

(56) References cited:
- EP-A1- 3 292 914
- EP-B1- 2 718 024
- EP-B1- 2 991 901
- DE-B4- 102009 022 795
- FR-A1- 2 976 214
- FR-A1- 3 010 918
- JP-A- H01 297 396
- US-A1- 2007 036 929
- US-A1- 2020 346 238
- US-B1- 7 666 077

## Description

### FIELD

This disclosure relates generally to preparing and printing on complex aircraft parts, and more particularly to improving efficiencies in preparation and printing processes.

### BACKGROUND

Treating and printing livery onto aircraft surfaces, to ensure proper adherence of applied materials to the aircraft surfaces, is difficult. Moreover, conventional methods for treating and printing livery onto aircraft surfaces is inefficient.

DE 10 2009 022 795 B4, in accordance with its abstract, states: Processing apparatus for coating a vertical stabilizer of an aircraft, the surface of which has been primed in preparation, wherein multiple consecutive and spatially separated workstations are provided for the assembly line-like coating, comprising a pre-treatment station for surface activation of the sanded surface of the vertical stabilizer using plasma after cleaning the surface and for subsequently priming the surface with a primer to enhance adhesion, a subsequent painting station for at least single-layer painting of the activated surface and for the immediate drying of the painted surface, as well as a subsequent decorating station for applying text and/or image motifs that are visually distinct from the paintwork.

US 7,666,077 B1, in accordance with its abstract, states: A paint booth arrangement maximizes floor space and efficiency of a painting operation. The arrangement comprises an equipment enclosing structure and certain air handling equipment specifically configured within the structure. The structure comprises forward and rearward sections, opposed wall sections, a centralized roof section, and opposed wall-to-roof sections, which sections define open space having varied elevation for receiving paintable equipment. The air handling equipment comprises an air intake and exhaust assemblies and an air replacement system. The air intake and exhaust assemblies extend coextensively intermediate the wall sections at the rearward section and function to support portions of the air replacement System. The air replacement system comprises conduit extending intermediate the forward and rearward sections as defined by the wall-to-roof sections. The air intake assembly communicates with the conduit for directing inlet airflow to the open space, and the air exhaust assembly comprises exhausts airflow from the open space.

EP 2 718 024 B1 relates to a coating facility.

JP 01297396 A relates to a working equipment for aircraft.

FR 2 976 214 A, in accordance with its abstract, states: This process for applying a motif, such as a logo, to the outer skin of an aircraft element comprises the following steps: a) applying at least one layer of paint to said element, b) applying at least one finishing layer ("basecoat") on said layer of paint, c) applying at least a first layer of transparent varnish ("clearcoat") on said finishing layer, d) applying said motif on this first layer of transparent varnish, e) applying at least a second layer of transparent varnish ("clearcoat") on said motif.

FR 3010918 A, in accordance with its abstract, states: The disclosure relates to a painting device for creating a coating on all or part of a three-dimensional surface of a part, notably an aircraft part, said coating comprising at least one layer of paint. The painting device comprises: a print head equipped with a plurality of ejection nozzles for spraying paint to form a layer on all or part of the surface of the part, means for moving the print head in a three-dimensional space where the part to be coated is placed.

US 2007/0036929 A1, in accordance with its abstract, states: An exemplary thin film applique includes a polymer film having first and second sides. A pattern layer also has first and second sides, with the first side of the polymer film and the first side of the pattern layer positioned adjacent to each other. A pressure-sensitive adhesive underlies either the second side of the pattern layer or the second side of the polymer film. A clearcoat covers the side of the polymer film or the pattern layer that is not overlying the pressure-sensitive adhesive, and the thickness of the clearcoat is adjusted to match the combined thickness of the polymer film, the pattern layer, and the pressure-sensitive adhesive. The polymer film, the pattern layer, and the pressure-sensitive adhesive exhibit chemical affinity for each other.

EP 2 991 901 B1 relates to methods and systems for applying aerodynamically functional coatings to a surface.

US 2020/0346238 A1, in accordance with its abstract, states: A system is provided that includes an air conditioner in each zone of a painting process line, supplying heated air according to temperature and humidity stabilization conditions for the painting process in each zone of a spray booth. A controller transmits operation information of the air conditioner, including the temperatures and humidities of the outdoor air flowing into the air conditioner and the indoor air inside each zone of the booth, as well as the temperature/humidity stabilization condition values for each zone of the booth. A server extracts stabilization time from the operation information, matching it with current operation information in a database where the stabilization time required for the temperature and humidity of each booth zone to reach the condition values is stored. The system then applies an operation command for the air conditioner to the controller at the scheduled operation time, derived by calculating the stabilization time backward from the time when a vehicle is expected to arrive at each booth zone.

EP 3 292 914 A1, in accordance with its abstract, states: A surface treatment assembly for treating a contoured surface includes an adjustable base having at least a first contour shape and a second contour shape. The surface treatment assembly further includes a plurality of applicator heads that are coupled to the adjustable base. Moreover, each applicator head is configured to apply a surface treatment to the contoured surface. Furthermore, the surface treatment assembly includes an actuator which is operatively coupled to the adjustable base, and the actuator is configured to manipulate the adjustable base between the first contour shape and

### SUMMARY

The subject matter of the present application has been developed in response to the present state of the art, and in particular, in response to the shortcomings of conventional large surface area printing, including printing on curved or contoured surfaces, that have not yet been fully solved by currently available techniques. Accordingly, the subject matter of the present application has been developed to provide methods and systems that overcome at least some of the above-discussed shortcomings of prior art techniques.

According to the present disclosure, a method and a system as defined in the independent claims are provided. Further embodiments of the claimed invention are defined in the dependent claims. Although the claimed invention is only defined by the claims, the below embodiments, examples, and aspects are present for aiding in understanding the background and advantages of the claimed invention.

In one example, a method includes preparing a surface of an aircraft part in a first processing booth to form a prepared surface of the aircraft part. The method also includes transporting the aircraft part to a second processing booth being adjacent to the first processing booth upon completion of preparing the surface. The method further includes applying a livery to the prepared surface of the aircraft part in a second processing booth and upon completion of applying the livery, transporting the aircraft part to a third processing booth being adjacent to the second processing booth. The method still further includes applying a clearcoat over at least the livery applied to the prepared surface of the aircraft part in a third processing booth.

In another example, a system includes a first processing booth configured to enable preparation of a surface of an aircraft part, a second processing booth configured to enable application of a livery to at least a portion of the surface of the aircraft part, and a first common partition disposed between the second processing booth and the first processing booth. The system further includes a third processing booth configured to enable application of a clearcoat over at least a portion of the surface of the aircraft part and a second common partition disposed between the second processing booth and the third processing booth.

In still another example, a hangar bay includes a surface processing structure having a first processing booth configured to enable preparation of a surface of an aircraft part, a second processing booth configured to enable application of a livery to at least a portion of the surface of the aircraft part, and a first common partition disposed between the second processing booth and the first processing booth. The surface processing structure further includes a third processing booth configured to enable application of a clearcoat over at least a portion of the surface of the aircraft part and a second common partition disposed between the second processing booth and the third processing booth.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which
Figure 1 is a perspective view of a surface preparation, printing, and finishing environment, according to one or more examples of the present disclosure;
Figure 2 is a schematic flow diagram of a method performed in the environment of Figure 1, according to one or more examples of the present disclosure;
Figure 3 shows a schematic flow diagram of a method of each processing step of Figure 2, according to one or more examples of the present disclosure;
Figure 4 is a perspective view of a paint/image removal, surface preparation, printing, and finishing environment, according to one or more examples of the present disclosure; and
Figure 5 is a schematic flow diagram of a method performed in the environment of Figure 4, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Reference is made to herein to the term "printed" or "inkjet printed" or "ink-jet printed" or "ink jet printed" to mean a method of forming a printed surface using ink as the print medium. The ink may be solid or liquid or the like ink. The term "painted" or "painting" refers to the process of using paint in the application method.

The following detailed description is intended to provide both apparatuses, systems, and methods for carrying out the disclosure. Actual scope of the claimed invention is defined by the appended claims.

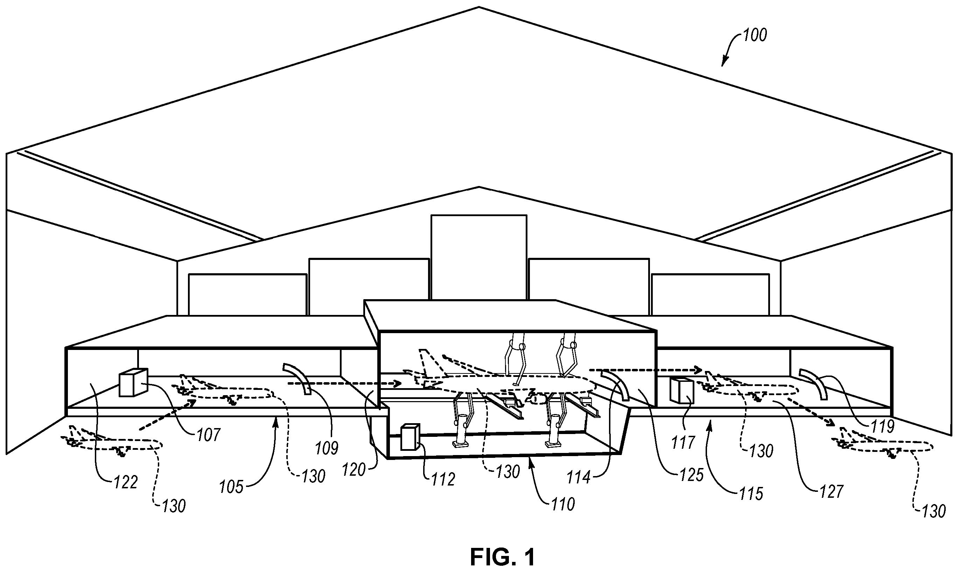

Referring to Figure 1, a hangar bay or booth100 includes multiple surface treatment bays adjacent each other and each being independently environmentally controlled. In various embodiments, the surface treatment bays include a surface preparation bay or booth105, a livery application bay or booth 110, and a surface finishing bay or booth 115. As used herein, unless otherwise indicated, "the bays" means a surface preparation bay or booth 305, a livery application bay or booth 310, and a surface finishing bay or booth 315.

In various embodiments, movement of the aircraft part 130 into and between each of the bays may be performed by various devices, such as an overhead crane system, aircraft tugs, tracked systems, or the like. The aircraft part 130 or the aircraft parts may be moved between adjacent to bays without being exposed to the environment external to the surface treatment bays but still within the hangar bay 100. Because each of the bays are adjacently located with sealable doors or partitions 120, 125 between the bays, respectively, and a sealable entrance partition 122 to the surface preparation bay 105 and sealable exit partition 127 to the surface finishing bay 115, environmental integrity is maintained around the aircraft part 130 from once processing starts at the surface preparation bay 105 to when processing ends at the surface finishing bay 115. In other words, the aircraft part 130 or the aircraft parts may be moved between adjacent bays, without being exposed to the environment external to the surface treatment bays, because the environments within each of the bays are controlled and the partitions 120, 122, 125, 127 are sealable.

In the surface preparation bay 105, the surface of the aircraft part 130 is prepared before any one of a primer, a basecoat, or a monocoat is applied. The aircraft part 130 may be a fully assembled aircraft or a portion of a fully assembled aircraft, such as, without limitation, a fuselage with or without a vertical stabilizer, a fuselage with or without wings, unattached wings, unattached vertical stabilizer, or unattached elevators. A maskant or covering is applied to the surface of the aircraft part 130 to expose only those portions of the surface to be prepared. The exposed portions of the surface may also receive livery in the livery application bay 110. Accordingly, the maskant or covering may stay in place for the entire preparation and printing process if the maskant material is used for overspray protection and does not become compromised during the preparation process. Wheel well coverings are an example where the coverings can be left on for the processes performed in the surface preparation bay 105, the livery application bay 110, and the surface finishing bay 115.

After the maskant is applied onto the surface, particulates are removed from the surface. The surface preparation bay 105 may include an air compressor for applying forced air on the surface to remove particulates from the surface. Additionally or alternatively, the surface preparation bay 105 may include solvents, moist wipes, dry wipes, and/or tack rags that are applied to the surface to remove particulates from the surface. One or more of a primer, basecoat, or monocoat is then applied in accordance with aircraft surface material properties, the spatial characteristics of the livery to be applied to the aircraft surface, and surface protection requirements. The surface preparation bay 105 may include a heating and ventilation air conditioning ("HVAC") system 107 that maintains humidity, air pressure, air quality, or the like at levels conducive to preparing the surface and applying the primer, basecoat, and/or monocoat. The surface preparation bay 105 may include a heating device 109 if drying of the surface or curing of materials applied to the surface is to be performed. The processes performed in the surface preparation bay 105 may be performed manually. However, robotic devices or mechanically assisted devices may also be used. Any fully robotic devices may be controlled automatically by a controller/processor having a user interface for allowing an operator to control processes.

In the livery application bay 110, a livery is applied to at least a portion of the surface of the aircraft part 130. As used herein, a livery is any of various simple or comprehensive images applied (e.g., printed, painted, adhered) onto an exterior surface of a part. In certain examples, the livery of an aircraft includes a set of insignia comprising color, graphic, and typographical identifiers, which operators apply to their aircraft to identify the operators of the aircraft. The livery application bay 110 includes environmental features that adhere to various predefined requirements that are associated with efficient, effective livery application. For example, the livery application bay 110 may include an HVAC system 112 that maintains humidity, air pressure, air quality, or the like at predefined levels. The livery application bay 110 includes a livery application device, such as, without limitation, an automated robotic inkjet system. The livery application bay 110 may include a heating device 114 if drying of the surface or curing of materials applied to the surface is to be performed. The processes performed in the livery application bay 110 may be performed manually using manual paint application techniques. Also, decorative livery may be applied in the livery application bay 110. A created decal can include the decorative livery. Alternatively or additionally, the decorative livery may applied manually. The partition 120 may be sealable for temporarily keeping the environment of the surface preparation bay 105 separate (e.g., isolated or sealed) from the environment of the livery application bay 110. In certain examples, the hangar bay 100 is configured to process multiple aircraft in different bays at the same time. In such examples, the aircraft part 130 is not moved into the livery application bay 110 until any aircraft part 130 in the in the livery application bay 110 is moved out of the livery application bay 110 and into the surface finishing bay 115.

In the surface finishing bay 115, surface finishing steps are performed, such as, without limitation, touch up and application of a clearcoat. The surface finishing bay 115 may include an HVAC system 117 that maintains humidity, air pressure, air quality, or the like at levels conducive to preparing the surface and applying the clearcoat. The surface finishing bay 115 may include a heating device 119 if drying of the surface or curing of materials applied to the surface is to be performed. The processes performed in the surface finishing bay 115 may be performed manually, however, robotic devices or mechanically assisted devices may also be used. Any fully robotic devices may be controlled automatically by a controller/processor having a user interface for allowing an operator to control processes. The partition 125 may be sealable for temporarily keeping the environment of the livery application bay 110 separate (e.g., isolated or sealed) from the environment of the surface finishing bay 115. After the process performed in the surface preparation bay 105 is complete, the partition 125 is opened and the aircraft part 130 is moved, via the motion device, into the surface finishing bay 115.

The surface preparation bay 105, the livery application bay 110, and/or the surface finishing bay 115 may be sized according to the aircraft part 130, such as a fuselage or wing. In certain examples, the surface preparation bay 105, the livery application bay 110, and the surface finishing bay 115 are limited in size to improve the cost and reduce the complexity of controlling heat/cool, humidity, and air quality. Also, by performing the processes for the aircraft part 130 within multiple adjoining bays, safety is improved because there is less of a need for wing stands and stacker/lifts, thereby reducing collision avoidance incidents.

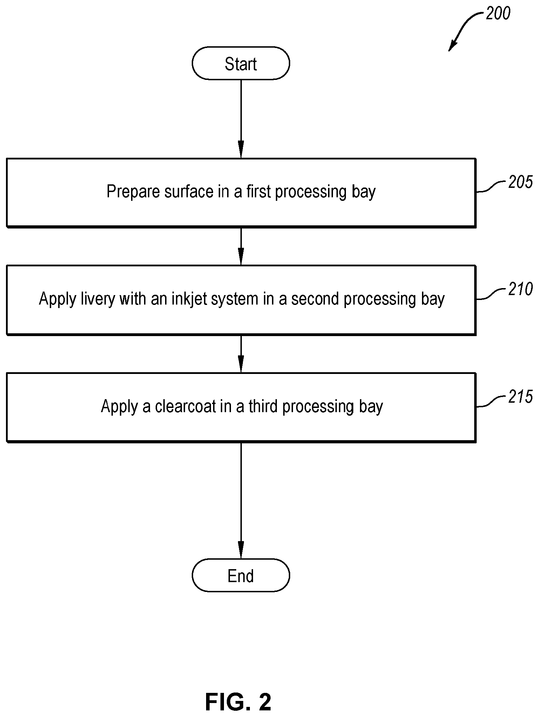

Referring to Figure 2, according to one example, a method 200 of applying a livery to an aircraft part is shown. The method 200 includes (block 205) preparing a surface of the aircraft part in a first processing bay. Additionally, the method 200 includes (block 210) applying a livery with an inkjet system using ink as the print medium in a second processing bay. Additionally, the method 200 includes (block 215) applying a clearcoat in a third processing bay.

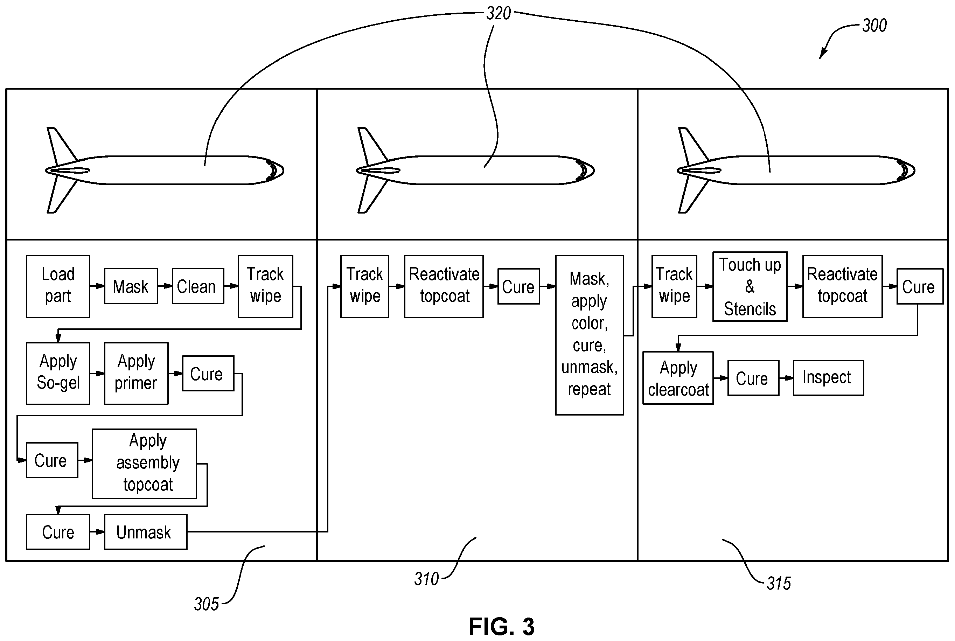

Referring to Figure 3, in various embodiments, an exemplary in-line surface preparation flow 300 includes a surface preparation stage 305, a livery application stage 310, and a surface finishing stage 315. The surface preparation stage 305 includes loading the part (e.g., a wingless fuselage 320) into the surface preparation bay 105, then masking and cleaning the surface of the wingless fuselage 320 according to a predefined surface preparation plan. Then, the surface of the wingless fuselage 320 is tack wiped followed by applying a corrosion protection material and/or an adhesive promoter (e.g., sol-gel) as appropriate for the surface. A primer is then applied and cured. Another optional intermediate primer coat may be applied followed by a curing step. Then an assembly topcoat is applied and cured followed by removal of the mask.

The livery application stage 310 includes a tack wiping step, followed by reactivating a topcoat (e.g., application of an adhesion promoter ("AP-1") and/or abrading) and curing. Then the surface is masked, and each of the colors are separately applied and cured according to the livery design. The mask is then removed.

The surface finishing stage 315 includes another tack wiping step, touch up and/or stenciling as necessary, topcoat reactivation as necessary, and curing. A clearcoat is applied as necessary followed by a curing step. After an inspection step, the surface preparation of the fuselage 320 is complete and the fuselage 320 is moved out of the surface finishing bay 115 to another manufacturing stage/location.

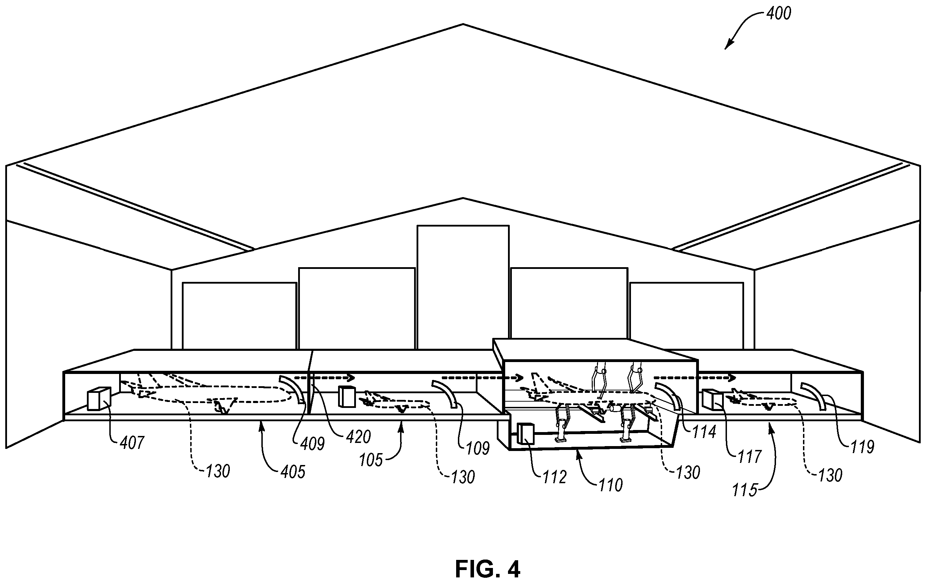

Referring to Figure 4, a hangar bay 400 includes the surface preparation bay 105, the livery application bay 110, the surface finishing bay 115, and a paint removal bay or booth 405. The paint removal bay 405 and the surface preparation bay 105 are separated by a movable door or partition 420. The partition 420 may be sealable for keeping the environment of the paint removal bay 405 separate from the environment of the surface preparation bay 105. In the paint removal bay 405, any images, decals, surface defects, or the like are removed or fixed by a variety of different processes. The addition of the paint removal bay 405 allow for surface treatment to be applied to at least fleet aircraft.

In various embodiments, the surface preparation bay 105, the livery application bay 110, the surface finishing bay 115, and the paint removal bay 405 include various safety equipment that is applicable to the processes performed in the respective bay. The safety equipment may include fire retardant systems that use fire retardants that are applicable to the materials that might ignite in the respective bays.

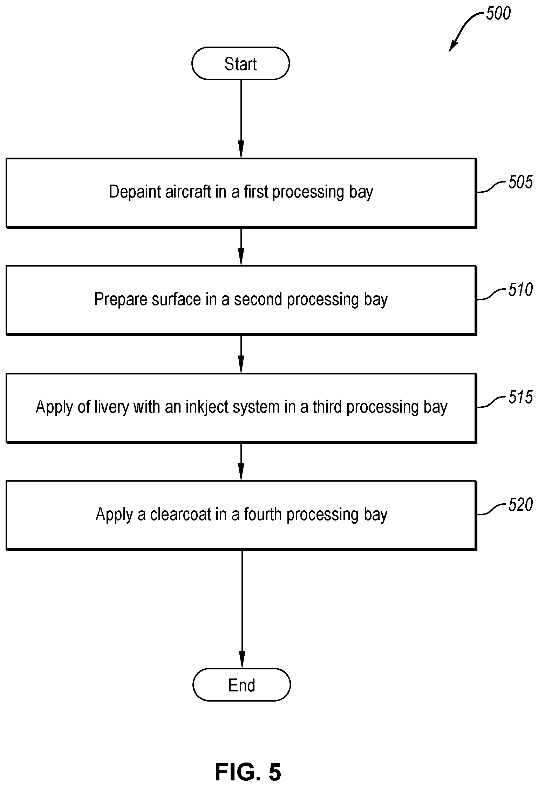

Referring to Figure 5, according to one example, a method 500 of surface treating a previously painted aircraft or aircraft part includes (block 505) depainting an aircraft or aircraft part in a first processing bay. Additionally, the method 500 includes (block 510) preparing a surface of the aircraft or aircraft part in a second processing bay. Additionally, the method 500 includes (block 515) applying a livery with an inkjet system in a third processing bay. Additionally, the method 500 includes (block 520) applying a clearcoat in a fourth processing bay.

In various embodiments, livery application bay 110 may include a livery-making system that includes an automated robotic printing system. The robotic printing system uses a control path and real-time sensor information to control a robotic printing system for performing livery printing of aircraft parts.

In various embodiments, the livery-making system may include a training system that include a processor, an input/output ("I/O") device(s), and a memory device. The processor is in data communication with the I/O device(s) and the memory device. The memory device is a computer-readable medium that includes program code instructions (i.e., software) that when executed by the processor performs a number of predefined tasks. The processor receives a three-dimensional (3D) digital model of the aircraft part to be painted. The 3D model may be stored in the memory device or the 3D model may be received from another 3D model generating system. The memory device includes a non-transient computer-readable medium, such as random-access memory (RAM), read-only memory (ROM), or other memory structure.

In various embodiments, the livery-making system receives simulated sensor data or actual sensor data received from sensors. The simulated or actual sensor data includes environmental information, such as humidity, atmospheric pressure, or other environmental data. Additionally, or alternatively, the simulated or actual sensor data includes simulated or actual measurement information.

In various embodiments, the printing system may include a robotic component, a printhead assembly, and/or a memory device. The printhead assembly includes a plurality of printheads, a plurality of actuators, and a plurality of sensors. The printhead assembly is robotically controlled. As used herein, a robotic system can include one or more robotic controllers, actuator arms, motors, wheels, pullies, end effectors, and the like, which in some examples are well known in the art. The robotic controller of the robotic system is programmable to control actuation of the actuatable components of the robotic system.

As discussed above, the robotic controller is programmed to transmit operational commands to the printhead assembly and other actuators/motors for controlling movement of the other actuators/motors and the actuators of the printhead assembly.

In various embodiments, the sensors are configured to scan and collect data during operation of the printing system, including printing operations performed by the robotic controller, the actuators/motors, and the printhead assembly. In some examples, the sensors include vision data sensors, such as a digital camera or other such vision sensors, distance data sensors, such as a time-of-flight camera, a light detection and ranging ("LIDAR") sensors or other such distance measurement sensors, topography sensors, such as an interferometer, a profilometer or other such surface topography sensors, capacitive transducers, or ultrasound transducers.

In one non-limiting example, the sensors include surface scanning lasers configured to scan and collect surface topography data of the contoured surface of the aircraft part and the surrounding areas. The surface topography data may include surface roughness data, surface imaging data, location/positioning data, height sense data, angular orientation data, and any other such surface data.

The methods and processes described herein with regard to printing may also be used with other surface treatment equipment, such as, without limitation, cleaning, abrading, priming, protecting, repairing, or other such surface treatment applied along the contoured surface of the object to be treated.

The following is a non-exhaustive list of numbered examples, which may or may not be claimed, of the subject matter, disclosed herein.

The following portion of this paragraph delineates example 1 of the subject matter, disclosed herein. According to example 1, a method includes a step of preparing a surface of an aircraft part in a first processing booth to form a prepared surface of the aircraft part. Upon completion of preparing the surface, the method includes the step of transporting the aircraft part to a second processing booth, which is adjacent to the first processing booth. The method also includes a step of applying a livery to the prepared surface of the aircraft part in the second processing booth. Upon completion of applying the livery, the method includes the step of transporting the aircraft part to a third processing booth, which is adjacent to the second processing booth. The method also includes a step of applying a clearcoat over at least the livery applied to the prepared surface of the aircraft part in a third processing booth.

The following portion of this paragraph delineates example 2 of the subject matter, disclosed herein. According to example 2, which encompasses example 1, above, the method also includes a step of providing a reduced ambient light condition within the first processing booth, the second processing booth, and the third processing booth.

The following portion of this paragraph delineates example 3 of the subject matter, disclosed herein. According to example 3, which encompasses any one of examples 1 and 2, above, the first processing booth shares a common partition with the second processing booth and the step of transporting the aircraft part from the first processing booth to the second processing includes opening the common partition and transporting the aircraft part through the common partition.

The following portion of this paragraph delineates example 4 of the subject matter, disclosed herein. According to example 4, which encompasses any one of examples 1-3, above, the second processing booth shares a second common partition with the third processing booth and the step of transporting the aircraft part from the second processing booth to the third processing booth includes opening the second common partition and transporting the aircraft part through the second common partition.

The following portion of this paragraph delineates example 5 of the subject matter, disclosed herein. According to example 5, which encompasses any one of examples 1-4, above, the aircraft part comprises a wingless aircraft fuselage.

The following portion of this paragraph delineates example 6 of the subject matter, disclosed herein. According to example 6, which encompasses any one of examples 1-5, above, the step of applying the livery includes applying the livery using an inkjet system.

The following portion of this paragraph delineates example 7 of the subject matter, disclosed herein. According to example 7, which encompasses any one of examples 1-6, above, the aircraft part includes at least one aircraft wing, when separated from a corresponding aircraft fuselage.

The following portion of this paragraph delineates example 8 of the subject matter, disclosed herein. According to example 8, which encompasses any one of examples 1-7, above, the method includes before preparing the surface of the aircraft part in the first processing booth, removing paint from a portion of the surface of the aircraft part in a fourth processing booth and upon completion of removing paint from a portion of the surface of the aircraft part, transporting the aircraft part to the first processing booth being adjacent to the fourth processing booth.

The following portion of this paragraph delineates example 9 of the subject matter, disclosed herein. According to example 9, a system includes a first processing booth configured to enable preparation of a surface of an aircraft part, a second processing booth configured to enable application of a livery to at least a portion of the surface of the aircraft part, a first common partition disposed between the second processing booth and the first processing booth, a third processing booth configured to enable application of a clearcoat over at least a portion of the surface of the aircraft part, and a second common partition disposed between the second processing booth and the third processing booth.

The following portion of this paragraph delineates example 10 of the subject matter, disclosed herein. According to example 10, which encompasses example 9, above, the first processing booth, the second processing booth, and the third processing booth are configured to provide reduced ambient light conditions within respective booths.

The following portion of this paragraph delineates example 11 of the subject matter, disclosed herein. According to example 11, which encompasses example 9 or 10, above, the first common partition is configured to be placeable in at least a partially opened position and a closed position. When in the at least partially opened position, space of the first processing booth is exposed to space of the second processing booth.

The following portion of this paragraph delineates example 12 of the subject matter, disclosed herein. According to example 12, which encompasses any one of examples 9-11, above, the second common partition is configured to be placeable in at least a partially opened position and a closed position. When in the at least partially opened position, space of the second processing booth is exposed to space of the third processing booth.

The following portion of this paragraph delineates example 13 of the subject matter, disclosed herein. According to example 13, which encompasses any one of examples 9-12, above, the second processing booth comprises an inkjet system configured to apply the livery.

The following portion of this paragraph delineates example 14 of the subject matter, disclosed herein. According to example 14, which encompasses any one of examples 9-13, above, the aircraft part includes a wingless aircraft fuselage.

The following portion of this paragraph delineates example 15 of the subject matter, disclosed herein. According to example 15, which encompasses any one of examples 9-14, above, a fourth processing booth configured to allow for removal of paint from at least a portion of the surface of the aircraft part and a third common partition disposed between the third processing booth and the fourth processing booth.

The following portion of this paragraph delineates example 16 of the subject matter, disclosed herein. According to example 16, which encompasses example 15, above, the third common partition is configured to be placeable in at least a partially opened position and a closed position. When in the at least partially opened position, space of the second processing booth is exposed to space of the third processing booth.

The following portion of this paragraph delineates example 17 of the subject matter, disclosed herein. According to example 17, which encompasses any one of examples 9-16, above, the first processing booth, the second processing booth, and the third processing booth are configured to provide environmental conditions corresponding to what each is configured to enable.

The following portion of this paragraph delineates example 18 of the subject matter, disclosed herein. According to example 18, a hangar bay includes a surface processing structure that includes a first processing booth) configured to enable preparation of a surface of an aircraft part, a second processing booth configured to enable application of a livery to at least a portion of the surface of the aircraft part, a first common partition disposed between the second processing booth and the first processing booth, a third processing booth configured to enable application of a clearcoat over at least a portion of the surface of the aircraft part, and a second common partition disposed between the second processing booth and the third processing booth.

The following portion of this paragraph delineates example 19 of the subject matter, disclosed herein. According to example 19, which encompasses example 18, above, the surface processing structure further includes a fourth processing booth configured to allow for removal of paint from at least a portion of the surface of the aircraft part and a third common partition disposed between the fourth processing booth and the first processing booth.

The following portion of this paragraph delineates example 20 of the subject matter, disclosed herein. According to example 20, which encompasses any one of examples 18 and 19, above, the hangar bay further includes a transport system configured to seamlessly transport the aircraft part into the first processing booth, through the second processing booth and the third processing booth, and out of the third processing booth.

**In** the above description, certain terms may be used such as "up," "down," "upper," "lower," "horizontal," "vertical," "left," "right," "over," "under" and the like. These terms are used, where applicable, to provide some clarity of description when dealing with relative relationships. But these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Those skilled in the art will recognize that at least a portion of the controllers, devices, units, and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term controller/processor, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of controller (e.g., at a first time), as a second type of controller (e.g., at a second time, which may in some instances coincide with, overlap, or follow a first time), and/or as a third type of controller (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first controller that has a first purpose, then a second controller that has a second purpose and then, a third controller that has a third purpose, and so on. The transition of a reconfigurable and/or controllable component may occur in as little as a few nanoseconds, or may occur over a period of minutes, hours, or days.

For example, a central processing unit/processor or the like of a controller may, at various times, operate as a component/module for displaying graphics on a screen, a component/module for writing data to a storage medium, a component/module for receiving user input, and a component/module for multiplying two large prime numbers, by configuring its logical gates in accordance with its instructions. Such reconfiguration may be invisible to the naked eye, and in some embodiments may include activation, deactivation, and/or re-routing of various portions of the component, e.g., switches, logic gates, inputs, and/or outputs. Thus, in the examples found in the foregoing/following disclosure, if an example includes or recites multiple components/modules, the example includes the possibility that the same hardware may implement more than one of the recited components/modules, either contemporaneously or at discrete times or timings. The implementation of multiple components/modules, whether using more components/modules, fewer components/modules, or the same number of components/modules as the number of components/modules, is merely an implementation choice and does not generally affect the operation of the components/modules themselves. Accordingly, it should be understood that any recitation of multiple discrete components/modules in this disclosure includes implementations of those components/modules as any number of underlying components/modules, including, but not limited to, a single component/module that reconfigures itself over time to carry out the functions of multiple components/modules, and/or multiple components/modules that similarly reconfigure, and/or special purpose reconfigurable components/modules.

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While the disclosed subject matter has been described in terms of illustrative embodiments, it will be understood by those skilled in the art that various modifications can be made thereto without departing from the scope of the claimed subject matter as set forth in the claims.

## Claims

1. A method comprising:
preparing a surface of an aircraft part in a first processing booth (105) to form a prepared surface of the aircraft part (130);
upon completion of preparing the surface, transporting the aircraft part (130) to a second processing booth (110) being adjacent to the first processing booth (105);
applying a livery to the prepared surface of the aircraft part (130) in the second processing booth;
upon completion of applying the livery, transporting the aircraft part (130) to a third processing booth (115) being adjacent to the second processing booth (110); and
applying a clearcoat over at least the livery applied to the prepared surface of the aircraft part in the third processing booth (115);
wherein the aircraft part comprises a wingless aircraft fuselage;
wherein the aircraft part (130) is seamlessly transported, by a transport system, into the first processing booth, through the second processing booth and the third processing booth and out of the third processing booth; wherein the aircraft part is transported between adjacent booths (105, 110, 115) without being exposed to the environment external to the booths;
wherein
the first processing booth (105) shares a common partition (120) with the second processing booth (110); and
transporting the aircraft part from the first processing booth (105) to the second processing booth (110) comprises:
opening the common partition (120); and
transporting the aircraft part through the common partition (120); and
wherein
the second processing booth shares a second common partition (125) with the third processing booth (115); and
transporting the aircraft part from the second processing booth (110) to the third processing booth (115) comprises:
opening the second common partition (125); and
transporting the aircraft part through the second common partition (125).

2. The method of claim 1, further comprising providing a reduced ambient light condition within the first processing booth (105), the second processing booth (110), and the third processing booth (115).

3. The method of any of the preceding claims , wherein applying the livery comprises applying the livery using an inkjet system and applying ink as the print medium.

4. The method of any of the preceding claims , wherein the aircraft part (130) comprises at least one aircraft wing, when separated from a corresponding aircraft fuselage.

5. The method of any of the preceding claims , further comprising:
before preparing the surface of the aircraft part (130) in the first processing booth (105), removing paint and/or ink from a portion of the surface of the aircraft part (130) in a fourth processing booth (405); and
upon completion of removing paint and/or ink from the portion of the surface of the aircraft part, transporting the aircraft part (130) to the first processing booth (105) being adjacent to the fourth processing booth (405).

6. A system (100) comprising:
a first processing booth (105) configured to enable preparation of a surface of an aircraft part (130), wherein the aircraft part comprises a wingless aircraft fuselage;
a second processing booth (110) configured to enable application of a livery to at least a portion of the surface of the aircraft part (130);
a first common partition (120) disposed between the second processing booth (110) and the first processing booth (105);
a third processing booth (115) configured to enable application of a clearcoat over at least a portion of the surface of the aircraft part (130); and
a second common partition (125) disposed between the second processing booth (110) and the third processing booth (115); and
a transport system configured to seamlessly transport the aircraft part into the first processing booth, through the second processing booth and the third processing booth, and out of the third processing booth and wherein the aircraft part is movable between adjacent booths without exposing the aircraft part to the environment external to the booths;
wherein the first common partition (120) is configured to be placeable in at least a partially opened position and a closed position, when in the at least partially opened position, space of the first processing booth (105) is exposed to space of the second processing booth (110); and
wherein the second common partition (125) is configured to be placeable in at least a partially opened position and a closed position, when in the at least partially opened position, space of the second processing booth (110) is exposed to space of the third processing booth (115).

7. The system of claim 6, wherein the first processing booth (105), the second processing booth (110), and the third processing booth (115) are configured to provide reduced ambient light conditions within respective booths.

8. The system of claim 6 or 7, the second processing booth (110) comprises an inkjet system configured to apply the livery using ink as the print medium.

9. The system of any of claims 6 to 8, further comprising:
a fourth processing booth (405) configured to allow for removal of paint and/or ink from at least a portion of the surface of the aircraft part (130); and
a third common partition (420) disposed between the first processing booth (105) and the fourth processing booth (405), wherein the third common partition (420) is configured to be placeable in at least a partially opened position and a closed position, when in the at least partially opened position, space of the first processing booth (105) is exposed to space of the fourth processing booth (405).

10. The system of claim 9, wherein the first processing booth (105), the second processing booth (110), and the third processing booth (115) are configured to provide environmental conditions corresponding to what each is configured to enable.

11. A hangar bay (400) comprising a system as defined in claim 6.

12. The hangar bay (400) of claim 11 wherein the system further comprises:
a fourth processing booth (405) configured to allow for removal of paint and/or ink from at least a portion of the surface of the aircraft part; and
a third common partition (420) disposed between the fourth processing booth (405) and the first processing booth (105).

## Patentansprüche

1. Verfahren, umfassend:
Vorbereiten einer Oberfläche eines Flugzeugteils in einer ersten Bearbeitungskabine (105), um eine vorbereitete Oberfläche des Flugzeugteils (130) zu bilden;
nach Abschluss der Vorbereitung der Oberfläche Transportieren des Flugzeugteils (130) zu einer zweiten Bearbeitungskabine (110), die an die erste Bearbeitungskabine (105) angrenzt;
Aufbringen einer Lackierung auf die vorbereitete Oberfläche des Flugzeugteils (130) in der zweiten Bearbeitungskabine;
nach Abschluss des Aufbringens der Lackierung Transportieren des Flugzeugteils (130) zu einer dritten Bearbeitungskabine (115), die an die zweite Bearbeitungskabine (110) angrenzt; und
Aufbringen eines Klarlacks über zumindest die auf die vorbereitete Oberfläche des Flugzeugteils aufgebrachte Lackierung in der dritten Bearbeitungskabine (115);
wobei das Flugzeugteil einen flügellosen Flugzeugrumpf umfasst;
wobei das Flugzeugteil (130) durch ein Transportsystem nahtlos in die erste Bearbeitungskabine, durch die zweite Bearbeitungskabine und die dritte Bearbeitungskabine und aus der dritten Bearbeitungskabine heraus transportiert wird; wobei das Flugzeugteil zwischen angrenzenden Kabinen (105, 110, 115) transportiert wird, ohne der Umgebung außerhalb der Kabinen ausgesetzt zu sein;
wobei
die erste Bearbeitungskabine (105) eine gemeinsame Trennwand (120) mit der zweiten Bearbeitungskabine (110) teilt; und
das Transportieren des Flugzeugteils von der ersten Bearbeitungskabine (105) zur zweiten Bearbeitungskabine (110) umfasst:
Öffnen der gemeinsamen Trennwand (120); und
Transportieren des Flugzeugteils durch die gemeinsame Trennwand (120); und wobei
die zweite Bearbeitungskabine eine zweite gemeinsame Trennwand (125) mit der dritten Bearbeitungskabine (115) teilt; und
das Transportieren des Flugzeugteils von der zweiten Bearbeitungskabine (110) zur dritten Bearbeitungskabine (115) umfasst:
Öffnen der zweiten gemeinsamen Trennwand (125); und
Transportieren des Flugzeugteils durch die zweite gemeinsame Trennwand (125).

2. Verfahren nach Anspruch 1, ferner umfassend das Bereitstellen einer reduzierten Umgebungslichtbedingung innerhalb der ersten Bearbeitungskabine (105), der zweiten Bearbeitungskabine (110) und der dritten Bearbeitungskabine (115).

3. Verfahren nach einem der vorangehenden Ansprüche, wobei das Aufbringen der Lackierung das Aufbringen der Lackierung mittels eines Inkjet-Systems und das Aufbringen von Tinte als Druckmedium umfasst.

4. Verfahren nach einem der vorangehenden Ansprüche, wobei das Flugzeugteil (130) zumindest einen Flugzeugflügel umfasst, wenn es von einem entsprechenden Flugzeugrumpf getrennt ist.

5. Verfahren nach einem der vorangehenden Ansprüche, ferner umfassend:
vor dem Vorbereiten der Oberfläche des Flugzeugteils (130) in der ersten Bearbeitungskabine (105) Entfernen von Farbe und/oder Tinte von einem Teil der Oberfläche des Flugzeugteils (130) in einer vierten Bearbeitungskabine (405); und
nach Abschluss des Entfernens von Farbe und/oder Tinte von dem Teil der Oberfläche des Flugzeugteils Transportieren des Flugzeugteils (130) zu der ersten Bearbeitungskabine (105), die an die vierte Bearbeitungskabine (405) angrenzt.

6. System (100), umfassend:
eine erste Bearbeitungskabine (105), die konfiguriert ist, die Vorbereitung einer Oberfläche eines Flugzeugteils (130) zu ermöglichen, wobei das Flugzeugteil einen flügellosen Flugzeugrumpf umfasst;
eine zweite Bearbeitungskabine (110), die konfiguriert ist, das Aufbringen einer Lackierung auf zumindest einen Teil der Oberfläche des Flugzeugteils (130) zu ermöglichen;
eine erste gemeinsame Trennwand (120), die zwischen der zweiten Bearbeitungskabine (110) und der ersten Bearbeitungskabine (105) angeordnet ist;
eine dritte Bearbeitungskabine (115), die konfiguriert ist, das Aufbringen eines Klarlacks über zumindest einen Teil der Oberfläche des Flugzeugteils (130) zu ermöglichen; und
eine zweite gemeinsame Trennwand (125), die zwischen der zweiten Bearbeitungskabine (110) und der dritten Bearbeitungskabine (115) angeordnet ist; und
ein Transportsystem, das konfiguriert ist, das Flugzeugteil nahtlos in die erste Bearbeitungskabine, durch die zweite Bearbeitungskabine und die dritte Bearbeitungskabine und aus der dritten Bearbeitungskabine heraus zu transportieren, wobei das Flugzeugteil zwischen angrenzenden Kabinen beweglich ist, ohne das Flugzeugteil der Umgebung außerhalb der Kabinen auszusetzen;
wobei die erste gemeinsame Trennwand (120) so konfiguriert ist, dass sie in mindestens eine teilweise geöffnete Stellung und eine geschlossene Stellung gebracht werden kann, wobei, wenn sie sich in der zumindest teilweise geöffneten Stellung befindet, der Raum der ersten Bearbeitungskabine (105) dem Raum der zweiten Bearbeitungskabine (110) ausgesetzt ist; und
wobei die zweite gemeinsame Trennwand (125) so konfiguriert ist, dass sie in mindestens eine teilweise geöffnete Stellung und eine geschlossene Stellung gebracht werden kann, wobei, wenn sie sich in der zumindest teilweise geöffneten Stellung befindet, der Raum der zweiten Bearbeitungskabine (110) dem Raum der dritten Bearbeitungskabine (115) ausgesetzt ist.

7. System nach Anspruch 6, wobei die erste Bearbeitungskabine (105), die zweite Bearbeitungskabine (110) und die dritte Bearbeitungskabine (115) konfiguriert sind, reduzierte Umgebungslichtbedingungen innerhalb der jeweiligen Kabinen bereitzustellen.

8. System nach Anspruch 6 oder 7, wobei die zweite Bearbeitungskabine (110) ein Inkjet-System umfasst, das konfiguriert ist, die Lackierung unter Verwendung von Tinte als Druckmedium aufzubringen.

9. System nach einem der Ansprüche 6 bis 8, ferner umfassend:
eine vierte Bearbeitungskabine (405), die konfiguriert ist, die Entfernung von Farbe und/oder Tinte von zumindest einem Teil der Oberfläche des Flugzeugteils (130) zu ermöglichen; und
eine dritte gemeinsame Trennwand (420), die zwischen der ersten Bearbeitungskabine (105) und der vierten Bearbeitungskabine (405) angeordnet ist, wobei die dritte gemeinsame Trennwand (420) so konfiguriert ist, dass sie in mindestens eine teilweise geöffnete Stellung und eine geschlossene Stellung gebracht werden kann, wobei, wenn sie sich in der zumindest teilweise geöffneten Stellung befindet, der Raum der ersten Bearbeitungskabine (105) dem Raum der vierten Bearbeitungskabine (405) ausgesetzt ist.

10. System nach Anspruch 9, wobei die erste Bearbeitungskabine (105), die zweite Bearbeitungskabine (110) und die dritte Bearbeitungskabine (115) so konfiguriert sind, Umgebungsbedingungen bereitzustellen, die dem entsprechen, was jeweils ermöglicht werden soll.

11. Hangarbucht (400), umfassend ein System gemäß Anspruch 6.

12. Hangarbucht (400) nach Anspruch 11, wobei das System ferner umfasst:
eine vierte Bearbeitungskabine (405), die konfiguriert ist, die Entfernung von Farbe und/oder Tinte von zumindest einem Teil der Oberfläche des Flugzeugteils zu ermöglichen; und
eine dritte gemeinsame Trennwand (420), die zwischen der vierten Bearbeitungskabine (405) und der ersten Bearbeitungskabine (105) angeordnet ist.

## Revendications

1. Procédé comprenant :
la préparation d'une surface d'une pièce d'aéronef dans une première cabine de traitement (105) pour former une surface préparée de la pièce d'aéronef (130) ;
à l'achèvement de la préparation de la surface, le transport de la pièce d'aéronef (130) vers une deuxième cabine de traitement (110) qui est adjacente à la première cabine de traitement (105) ;
l'application d'une livrée sur la surface préparée de la pièce d'aéronef (130) dans la deuxième cabine de traitement ;
à l'achèvement de l'application de la livrée, le transport de la pièce d'aéronef (130) vers une troisième cabine de traitement (115) qui est adjacente à la deuxième cabine de traitement (110) ; et
l'application d'un vernis transparent sur au moins la livrée appliquée sur la surface préparée de la pièce d'aéronef dans la troisième cabine de traitement (115) ;
dans lequel la pièce d'aéronef comprend un fuselage d'aéronef sans ailes ;
dans lequel la pièce d'aéronef (130) est transportée sans rupture, par un système de transport, dans la première cabine de traitement, à travers la deuxième cabine de traitement et la troisième cabine de traitement, et hors de la troisième cabine de traitement ; dans lequel la pièce d'aéronef est transportée entre des cabines adjacentes (105, 110, 115) sans être exposée à l'environnement extérieur aux cabines ;
dans lequel
la première cabine de traitement (105) partage une cloison commune (120) avec la deuxième cabine de traitement (110) ; et
le transport de la pièce d'aéronef de la première cabine de traitement (105) à la deuxième cabine de traitement (110) comprend :
l'ouverture de la cloison commune (120) ; et
le transport de la pièce d'aéronef à travers la cloison commune (120) ; et
dans lequel
la deuxième cabine de traitement partage une deuxième cloison commune (125) avec la troisième cabine de traitement (115) ; et
le transport de la pièce d'aéronef de la deuxième cabine de traitement (110) à la troisième cabine de traitement (115) comprend :
l'ouverture de la deuxième cloison commune (125) ; et
le transport de la pièce d'aéronef à travers la deuxième cloison commune (125).

2. Procédé selon la revendication 1, comprenant en outre la fourniture d'une condition de lumière ambiante réduite à l'intérieur de la première cabine de traitement (105), de la deuxième cabine de traitement (110) et de la troisième cabine de traitement (115).

3. Procédé selon l'une quelconque des revendications précédentes, dans lequel l'application de la livrée comprend l'application de la livrée à l'aide d'un système à jet d'encre et l'application d'encre en tant que support d'impression.

4. Procédé selon l'une quelconque des revendications précédentes, dans lequel la pièce d'aéronef (130) comprend au moins une aile d'aéronef, lorsqu'elle est séparée d'un fuselage d'aéronef correspondant.

5. Procédé selon l'une quelconque des revendications précédentes, comprenant en outre :
avant la préparation de la surface de la pièce d'aéronef (130) dans la première cabine de traitement (105), l'enlèvement de la peinture et/ou de l'encre d'une partie de la surface de la pièce d'aéronef (130) dans une quatrième cabine de traitement (405) ; et
à l'achèvement de l'enlèvement de la peinture et/ou de l'encre de la partie de la surface de la pièce d'aéronef, le transport de la pièce d'aéronef (130) vers la première cabine de traitement (105) qui est adjacente à la quatrième cabine de traitement (405).

6. Système (100) comprenant :
une première cabine de traitement (105) conçue pour permettre la préparation d'une surface d'une pièce d'aéronef (130), dans lequel la pièce d'aéronef comprend un fuselage d'aéronef sans ailes ;
une deuxième cabine de traitement (110) conçue pour permettre l'application d'une livrée sur au moins une partie de la surface de la pièce d'aéronef (130) ;
une première cloison commune (120) disposée entre la deuxième cabine de traitement (110) et la première cabine de traitement (105) ;
une troisième cabine de traitement (115) conçue pour permettre l'application d'un vernis transparent sur au moins une partie de la surface de la pièce d'aéronef (130) ; et
une deuxième cloison commune (125) disposée entre la deuxième cabine de traitement (110) et la troisième cabine de traitement (115) ; et
un système de transport conçu pour transporter, sans rupture, la pièce d'aéronef dans la première cabine de traitement, à travers la deuxième cabine de traitement et la troisième cabine de traitement, et hors de la troisième cabine de traitement, et dans lequel la pièce d'aéronef peut être déplacée entre des cabines adjacentes sans exposer la pièce d'aéronef à l'environnement extérieur aux cabines ;
dans lequel la première cloison commune (120) est conçue pour pouvoir être placée dans au moins une position partiellement ouverte et une position fermée, lorsqu'elle est dans l'au moins une position partiellement ouverte, l'espace de la première cabine de traitement (105) est exposé à l'espace de la deuxième cabine de traitement (110) ; et
dans lequel la deuxième cloison commune (125) est conçue pour pouvoir être placée dans au moins une position partiellement ouverte et une position fermée, lorsqu'elle est dans l'au moins une position partiellement ouverte, l'espace de la deuxième cabine de traitement (110) est exposé à l'espace de la troisième cabine de traitement (115).

7. Système selon la revendication 6, dans lequel la première cabine de traitement (105), la deuxième cabine de traitement (110) et la troisième cabine de traitement (115) sont conçues pour fournir des conditions de lumière ambiante réduite à l'intérieur des cabines respectives.

8. Système selon la revendication 6 ou 7, la deuxième cabine de traitement (110) comprend un système à jet d'encre conçu pour appliquer la livrée à l'aide d'encre en tant que support d'impression.

9. Système selon l'une quelconque des revendications 6 à 8, comprenant en outre :
une quatrième cabine de traitement (405) conçue pour permettre l'enlèvement de la peinture et/ou de l'encre d'au moins une partie de la surface de la pièce d'aéronef (130) ; et
une troisième cloison commune (420) disposée entre la première cabine de traitement (105) et la quatrième cabine de traitement (405), dans lequel la troisième cloison commune (420) est conçue pour pouvoir être placée dans au moins une position partiellement ouverte et une position fermée, lorsqu'elle est dans l'au moins une position partiellement ouverte, l'espace de la première cabine de traitement (105) est exposé à l'espace de la quatrième cabine de traitement (405).

10. Système selon la revendication 9, dans lequel la première cabine de traitement (105), la deuxième cabine de traitement (110) et la troisième cabine de traitement (115) sont conçues pour fournir des conditions environnementales correspondant à ce que chacune est conçue pour permettre.

11. Travée de hangar (400) comprenant un système selon la revendication 6.

12. Travée de hangar (400) selon la revendication 11, dans laquelle le système comprend en outre :
une quatrième cabine de traitement (405) conçue pour permettre l'enlèvement de la peinture et/ou de l'encre d'au moins une partie de la surface de la pièce d'aéronef ; et
une troisième cloison commune (420) disposée entre la quatrième cabine de traitement (405) et la première cabine de traitement (105).
